# EUROPEAN PATENT SPECIFICATION

(11) **EP 1 492 842 B1**
(45) Date of publication and mention of the grant of the patent: **12.04.2006**
(21) Application number: 03721459.0
(22) Date of filing: 26.03.2003
(51) Int. Cl.: C08K 5/3462, C08L 67/00

(54) **COMPOUNDS USEFUL FOR REDUCING ACETALDEHYDE CONTENT OF POLYETHYLENE TEREPHTHALATE, THEIR USE AND PRODUCTS RESULTING THEREFROM**
VERBINDUNGEN ZUR REDUZIERUNG DES ACETALDEHYDGEHALTS VON POLYETHYLENTEREPHTHALAT , IHRE VERWENDUNG UND DARAUS ERHALTENE PRODUKTE
COMPOSES UTILES POUR LA REDUCTION DE TENEUR EN ALDEHYDE DE POLYETHYLENE TEREPHTALATE, LEUR UTILISATION ET PRODUITS A BASE DE TELS COMPOSES

(30) Priority: 28.03.2002 US 368432 P; 20.12.2002 US 435171 P
(43) Date of publication of application: 05.01.2005
(73) Proprietor: Equipolymers GmbH, 06258 Schkopau (DE)
(72) Inventor: WIEGNER, Jens-Peter, 06130 Halle (DE); VOERCKEL, Volkmar, 06217 Merseburg (DE); STAEUBUR, Hans, 8832 Wollerau (CH)
(74) Representative: Raynor, John
(86) International application number: PCT/US2003/009183
(87) International publication number: WO 2003/082967

(56) References cited:
- DE-A- 19 741 778
- GB-A- 1 222 474
- US-A- 4 656 209
- US-B1- 6 274 212

## Description

### Field of the Invention

This invention relates to polyester materials such as polyethylene terephthalate (PET) and products such as bottles, containers, films and sheets made therefrom. The invention includes the use of certain "enaminones" including a preferred class of heterocyclic compounds which are present during melt processing of such polyester materials in order to reduce the content of acetaldehyde (AA).

### Background of the Invention

Polyesters, especially polyethylene terephthalate (PET) are commonly used in food and beverage containers, films and sheets. These materials are subjected to significant thermal and oxidative stress during melt processing (e.g. injection molding, blow molding, extrusion, etc.) which commonly results in the generation of undesirable degradation products including acetaldehyde (AA). These degradation products can migrate from the resulting polyester product and effect the taste of foods and beverages. For example, even trace amounts (as low as 10µg/L) of AA can effect the taste of mineral water.

Several means of reducing the AA content of melt processed polyesters are known in the art. Three preferred techniques include: the use of oxidation stabilizers, the reduction of the vinyl ester content during the so-called "solid state polymerization" and the use of AA "scavengers". The term "scavengers" refers to substances or compounds that chemically bind to or react with AA to form harmless reaction products. Examples of such scavengers including polyamides on a xylylene base (see for example JP 62 181 336; JP 62 050 328; US 5,258,233). The use of commercially available polyamides, such as Nylon (EP 714 832; WO 97/01427; US 4,837,115; US 5,340,884) are also described. A special polyamide on a terephthalic acid basis, bis-(hydroxymethyl)-cyclohexane and bis-(aminomethyl)-cyclohexane is described by patent WO 97/28218. Additional scavengers are described in US Patent No. 6,274,212. The organic compounds used are for instance aromatic disubstituted amines (anthranilic acid amide, 1,8-diamino-naphthalene and 3,4-diamino-benzoic acid). Unfortunately, these known scavengers tend to result in a discoloration (yellowing) of the final polyester product.

"Polyols" (polyhydric alcohols typically having the formula CH₂OH(CHOH)ₙCH₂OH where n is 2, 3, 4 or 5) such as pentaerythritol and sugar alcohols are additional examples of known aldehyde scavengers. These substances are colorless and hence have no or only little negative effect on the color index (see for example WO 00/66659, WO 01/00724). However, with these substances it is not possible to reduce the acetaldehyde content in the final product by more than 60%.

An object of the present invention is to provide AA scavengers that effectively reduce acetaldehyde content of melt processed polyesters and the resulting products (e.g. containers, bottles, etc.) made therefrom. Moreover, such AA scavengers should be physiologically safe for food applications, cost effective, and sufficiently stable (thermally and oxidatively stable) under polyester melt processing conditions. Furthermore, such scavengers should not negatively effect melt processing parameters of the polyester, that is, the scavengers should have a solubility and melt temperature that is compatible with the melt processing conditions used in connection with the polyester. In many applications, the scavengers should exhibit reduced discoloring or "yellowing" of the final product.

### Summary of the Invention

The present invention includes certain "enaminones," including but not limited to a preferred class of heterocyclic compounds, which are present during melt processing of polyester materials in order to reduce the content of acetaldehyde (AA). The invention further includes polyester compositions including the subject compounds (hereinafter "scavengers"), e.g. masterbatch compositions, along with products such as bottles, containers, films and sheets made therefrom. The invention also includes methods for reducing the AA content of polyester in polyester compositions and products made therefrom.

Many species of the subject class of scavengers have excellent solubility in PET and are stable (i.e. resist thermal and oxidative degradation) under common melt processing conditions and as such, do not negatively impact polyester processing parameters. Preferred species are commercially available and/or relatively easy to make and are pre-approved for food-related applications. Finally, preferred species (particularly when combined with the aforementioned polyols) are highly effective at scavenging AA and have reduced tendency to discolor the final product.

### Detailed Description of the Invention

The present invention includes a class of scavengers based upon an "enaminones" and related structures as represented by Formula 1: 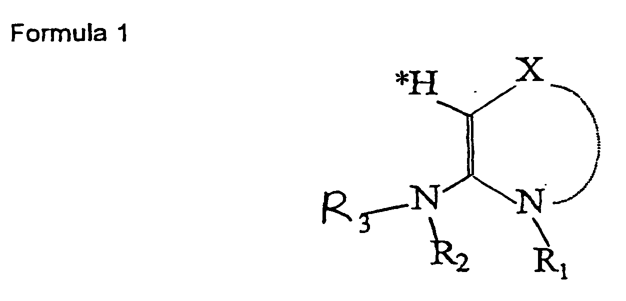 wherein:
X is an electron withdrawing group selected from: carboxyl groups - (ketone, aldehyde, ester, acid, amide); nitro, nitrile, sulfone; and a group including any of the aforementioned groups along with atoms necessary to complete a 5 or 6-membered heterocyclic ring (i.e. wherein such atoms are selected from carbon, nitrogen, oxygen, and sulfur but preferably carbon and nitrogen) as indicated in the dotted line of Formula 1. X is preferably a group including two atoms (selected from carbon and nitrogen) to form a 6-membered heterocyclic ring which may be substituted with groups such carboxyl groups selected from ketone, ester, acid, and amide, or an amine. Such a heterocyclic ring structure provides the scavenger with greater thermal stability and is therefor preferred. Such ring compounds have high thermal stability with melting points of approximately 200 to 350°C, but more preferably 240 to 300°C. It will be appreciated that in those instances wherein X does not form the subject ring, the nitrogen bonded to R1 will include an additional constituent group. While not shown in Formula 1, such a group, (e.g. R1') is bonded to the nitrogen and is selected from the same groups as defined for R1 below (but excluding the possibility of a double bond within a ring structure).
R1 is hydrogen, an aliphatic group having from 1 to 6 carbon atoms which may be substituted or unsubstituted, or in instances when X forms a ring as shown in dotted lines in Formula 1, R1 may be a double bound as part of a ring, (e.g. as is the case with 6-aminoisocytosine) or may be a hydrogen or aliphatic group having from 1 to 6 carbon atoms which may be substituted or unsubstituted (e.g. as is the case with 6-aminouracil wherein R1 is hydrogen). Preferred aliphatic groups include alkene, alkyne, and alkyl groups (such as methyl, ethyl, propyl, butyl, pentyl and hexyl groups). Particularly preferred groups include hydrogen, methyl and a double bond with an adjacent atom within a ring, as shown in numerous examples below.
R2 and R3 may be the same or different and are selected from: hydrogen, an aliphatic group having from 1 to 6 carbon atoms which may be substituted or unsubstituted, or R2 and R3 may collectively form a ring structure, such as a five or six membered ring. Preferred aliphatic groups including alkene, and alkyl groups (such as methyl, ethyl, propyl, butyl, pentyl and hexyl groups). R2 and R3 are preferably hydrogen or methyl groups.

While not wanting to be bound by theory, it is believed that the structure represented by Formula 1 provides the designated hydrogen (*H) with a preferred acidity or "reactivity" with AA.

A particularly preferred subclass of scavenger includes a 6-membered ring including 2 nitrogen atoms located in meta positions, as shown in Formula 2. 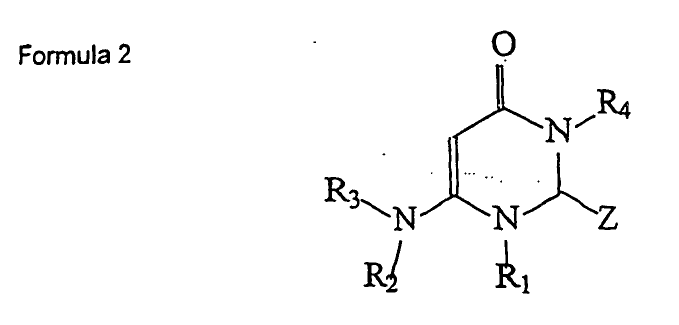 wherein:
R4 is hydrogen, an aliphatic group having from 1 to 6 carbon atoms which may be substituted or unsubstituted. Preferred aliphatic groups include alkene, alkyne, and alkyl groups (such as methyl, ethyl, propyl, butyl, pentyl and hexyl groups). Particularly preferred groups include hydrogen and methyl;
Z is selected from the following groups: an amine group and a double-bonded carbonyl oxygen as shown in Formula 3 and 4, respectively. (With reference to Formula 2, it will be appreciated by those skilled in the art that R1 will be a double bond within the ring when Z is an amine group - as shown in Formula 3). 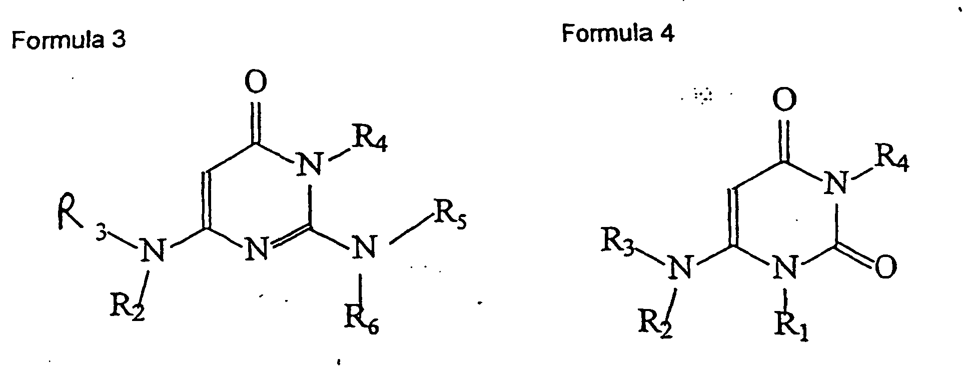
wherein:
R5 and R6 may be the same or different and are selected from: hydrogen, an aliphatic group having from 1 to 6 carbon atoms which may be substituted or unsubstituted, or R5 and R6 may collectively form a ring structure, such as a five or six membered ring. Preferred aliphatic groups include alkene, alkyne, and alkyl groups (such as methyl, ethyl, propyl, butyl, pentyl and hexyl groups). R5 and R6 are preferably hydrogen or methyl groups.

Amino-pyrimidine-diones (amino-uracils) and amino-pyrimidinones proved to be particularly effective, with amino-pyrimidine-diones especially effective in reducing the content in acetaldehyde in the melt processed polyester. Because of their structure, these compounds are not able to form the compounds described in US Patent No. 6,274,212.

The following compounds proved to be particularly suitable, without limiting the use according to the invention to these compounds by naming them:

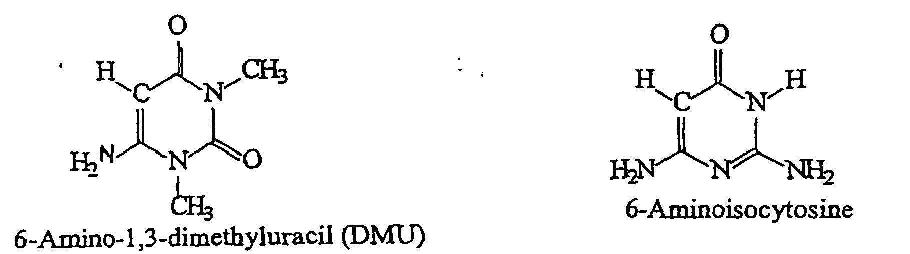

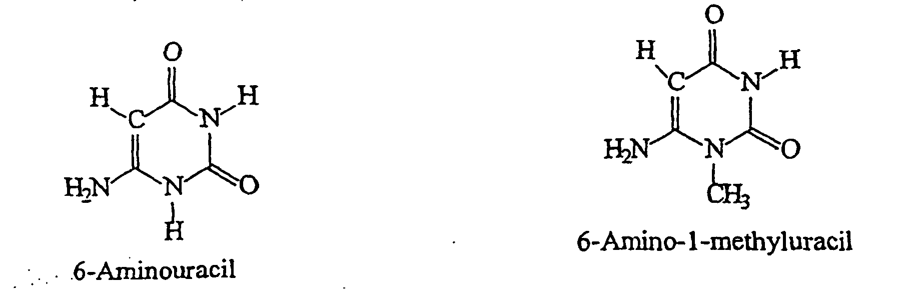

Melt processing (e.g. extrusion) of polyester compositions typically occurs at temperatures between 230 to 300°C, but more commonly from 250 to 290°C with residence times of from 30 to 120 seconds. The ideal quantity of scavenger utilized in a "polyester composition" depends upon the specific species of scavenger used (or combination of scavengers used together), the specific type and grade of polyester used, the specific melt processing conditions utilized, and final product application. However, preferred concentrations ranges of the subject scavenger present in the polyester being melt processed are typically from 50 to 5000 ppm (parts per million with respect to total polyester), preferably from 100 to 2000 ppm. When used in a masterbatch of polyester and scavenger, the scavenger preferably amounts to from 1 to 20 weight percent (wt.%) (preferably 3 to 8 wt%) of the composition based upon the total weight of the polyester and scavenger.

As indicated previously, the subject scavengers can be used in combination with known acetaldehyde scavengers such as those described in US Patent No. 6,274,212 and/or polyols, preferably mannitol, sorbitol or xylitol. When used in combination with polyols, the concentration of the subject scavenger is preferably from 50 to 2000 ppm, more preferably 300 to 1000 ppm of the polyester composition (to be melt processed), and the concentration of polyol is preferably from 100 to 1000 ppm, but more preferably from 300 to 500 ppm (where ppm is parts of scavenger or polyol per million parts of polyester). Said another way, the total quantity of scavenger, including the polyol, is from 50 to 5000 ppm with the ratio of the subject scavenger to polyol typically being from 5:1 to 1:5 but more commonly 2:1 or 1:1.

The subject scavengers (along with the combination of any known scavengers) may be introduced or incorporated into the melt processing in a variety of ways. For example, the scavengers may be dispersed in powder or granular from or in a liquid carrier or slurry and mixed with the polyester pellets immediately before melt processing, or added in pure form during extrusion, or incorporated by spraying a slurry or liquid mixture of the scavenger onto the pellets prior to drying, or by introduction of a melt or suspension of the scavenger into pre-melted polyester, or incorporated as micro beads (i.e. micro pearls) or as masterbatch, e.g. by making a masterbatch of the scavenger and PET and then mixing the masterbatch pellets with PET pellets at the desired level before drying and melt processing. It is also possible to use lower-melting materials, such as polybutylene terephthalate, as support material for the masterbatch, to achieve better homogenization.

### Examples

The invention will be further elucidated below by means of the following examples.

PET was melt processed on an injection molding machine of type ES 200-50 of the Engel Co., equipped with a 30 mm diameter screw and an UD ratio of 20. PET pellets to be processed were dried and sent to the feed funnel under nitrogen of the injection molding machine, together with the scavenger in pure form or the master batch as indicated below. The mixture was processed (melted and homogenized) at temperatures between 270°C to 300°C. The resulting melt was injected under pressure into the cooled mold.

### Processing parameters:

| | |
|---|---|
| Drying: | |
| | Equipment: circulating air drying cabinet UT20 of the Heraeus Co |
| | Temperature & Duration: 120°C for 12 hours or 160°C for 6 hours |
| Injection molding: | |
| | Machine: ES 200-50, Engel Co. |
| | Cylinder temperatures: 277/277/277/277 °C |
| | Screw speed: 42 rpm |
| | Cooling time: 10 seconds |
| | Holding pressure: 10 seconds |
| | Melt residence time: 2.5 minutes |

The acetaldehyde determination for the extruded materials described above was performed as follows: the various materials were first milled in the presence of liquid nitrogen in a centrifugal mill (ZM 1) of the Retsch Co, with a 1 mm screen. Approximately 0.1-0.3 grams of the milled material were immediately placed in a 22 ml sample bottle and sealed with a poly-tetrafluoro-ethylene seal. The sample bottles were temperature-conditioned for 90 minutes at 150°C in a HeadSpace oven (Headspace Autosampler HS-XL, of Perkin Elmer) and analyzed by GC (GC Autosystem XL, Perkin Elner) with an external standard. The calibration curve was prepared by complete evaporation of aqueous solutions of different acetaldehyde contents. Instrument parameters for acetaldehyde determination were as follows:

| Headspace Autosampler conditions: | |
|---|---|
| Oven temperature: | 150°C |
| Needle temperature: | 160°C |
| Transfer temperature: | 170°C |
| Residence time: | 90 minutes |

| Gas chromatography conditions: | |
|---|---|
| Column: | 1.8 m x 1/8" stainless steel |
| Filling: | Porapack Q, 80/100 mesh |
| Carrier gas: | nitrogen, 30 ml/min |
| Fuel gas: | hydrogen |
| Air: | synthetic air |
| Column temperature: | 140°C |
| Detector temperature: | 220°C |

The extrusion of polyesters, in particular if NH- and/or OH- functional groups are present, is always accompanied by molecular weight degradation of the polyester. As such, it was necessary to determine the molecular weight of the polyester only after extrusion, since too severe a degradation limits the possibilities of using the end products manufactured from the polyester. The intrinsic viscosity (IV) of the extruded polyester was determined for this reason. The determination of the IV of PET is accomplished by measuring the solution viscosity in UBBELHODE viscometers. Polymer solutions with a concentration of 0.5 g/dL in a 1:1 mixture of phenol and 1,2-dichloro-benzene are used.

### Example 1 (Addition of scavenger as pure component prior to extrusion)

The Table 1A and B show the AA content of extruded PET material as a function of the scavenger used.

**Table 1A**

| | | | | | |
|---|---|---|---|---|---|
| Test No. | Scavenger used | Added (ppm) | AA content (ppm) | AA % | Intrinsic viscosity (dL/g) |
| 0 Comp. Ex. | | - | 11.1 | 100 | 0.772 |
| 1 | 6-amino-1H-pyrimidine-2,4-dione (6-amino uracil) | 500 | 4.9 | 44.1 | 0.748 |
| 2 Comp. Ex. | 2-amino-6-methyl-pyrimidine-4-one | 500 | 7.6 | 68.5 | 0.722 |
| 3 Comp. Ex. | 2,4-(1H,3H)-pyrimidine-dione | 500 | 7.6 | 68.5 | 0.722 |
| 4 Comp. Ex. | Guanine | 500 | 9.1 | 82.0 | 0.768 |
| 5 Comp. Ex. | Uric acid | 500 | 7.5 | 67.6 | 0.773 |

**Table 1B**

| Test No. | Scavenger used | Added (ppm) | AA content (ppm) | AA % | Intrinsic viscosity (dl/g) |
|---|---|---|---|---|---|
| 0 Comp. Ex. | - | - | 11.1 | 100 | 0.772 |
| 1 | 6-amino-isocytosine | 500 | 2.6 | 23.4 | 0.748 |
| 2 | 6-amino-1-methy1-pyrimidine-2,4-dione | 500 | 5.4 | 48.6 | 0.75 |
| 3 | 6-amino-1,3-dimethyl-pyrimidine-2,4-dione (6-amino-1,3-dimethyl-uracil) | 500 | 4.3 | 38.7 | 0.766 |

Table 2A, 2B and 2C provide an overview of the dependence of the acetaldehyde content on the concentration of various scavengers.

**Table 2A**

| Test No. | Scavenger used | Added ppm | AA content ppm | AA % | Intrinsic viscosity (dL/g) |
|---|---|---|---|---|---|
| 0 Comp. Ex. | - | - | 11.1 | 100 | 0.772 |
| 1 | 6-amino-1H-pyrimidine-2,4-dione | 350 | 6.7 | 60.4 | 0.753 |
| 2 | 6-amino-1H-pyrimidine-2,4-dione | 750 | 4.3 | 38.7 | 0.739 |
| 3 | 6-amino-1H-pyrimidine-2,4-dione | 1,500 | 2.6 | 23.4 | 0.720 |

**Table 2B**

| Test No. | Scavenger used | Added Ppm | AA content ppm | AA % | Intrinsic viscosity (dl/g) |
|---|---|---|---|---|---|
| 0 Comp. Ex. | - | - | 11.1 | 100 | 0.792 |
| 1 | 6-amino-1,3-dimethyl-pyrimidine-2,4-dione | 300 | 5.2 | 46.8 | 0.785 |
| 2 | 6-amino-1,3-dimethyl-pyrimidine-2,4-dione | 500 | 4.3 | 38.7 | 0.780 |
| 3 | 6-amino-1,3-dimethyl-pyrimidine-2,4-dione | 750 | 2.9 | 26.1 | 0.776 |
| 4 | 6-amino-1,3-dimethyl-pyrimidine-2,4-dione | 1,000 | 1.8 | 16.2 | 0.777 |

**Table 2C**

| Test No. | Scavenger used | Added ppm | AA content ppm | AA % | Intrinsic viscosity (dl/g) |
|---|---|---|---|---|---|
| 0 Comp. Ex. | - | - | 11.1 | 100 | 0.749 |
| 1 | 6-amino-1-methyl-pyrimidine-2,4-dione | 500 | 5.4 | 48.6 | 0.74 |
| 2 | 6-amino-1-methyl-pyrimidine-2,4-dione | 750 | 3.7 | 33.3 | 0.731 |
| 3 | 6-amino-1-methyl-pyrimidine-2,4-dione | 1,000 | 2.6 | 23.4 | 0.731 |

### Example 2 (combination of scavengers as masterbatch)

Polyols may be combined with the scavengers of the present invention in order to reduce discoloration. That is, a portion of the scavenger of the subject invention may be replaced with the polyol while maintaining a high level of AA scavenging effect. However, due to limitations associated with polyols, a reduction in the AA content by more than 60% is not possible, without the addition of the subject scavenger.

Table 3 illustrates a significant decrease in AA content of extruded PET materials when the subject scavengers according to the invention are added in combination with mannitol as a masterbatch.

**Table 3**

| Test No. | Scavenger | Concentration amino-uracil/mannitol ppm | Intrinsic viscosity dUg | AA ppm | AA % |
|---|---|---|---|---|---|
| 0 | | - | 0.772 | 11.1 | 100 |
| 1 Comp. ex. | Mannitol | 0/400 | 0.742 | 5.5 | 50 |
| 2 Comp. ex. | Mannitol | 0/3000 | 0.661 | 5.2 | 46.8 |
| 3 | 6-amino-uracil | 500 | 0.748 | 4.9 | 44.1 |
| 4 | 6-amino-uracil/ mannitol | 300/400 | 0.728 | 4.4 | 39.6 |
| 5 | 6-amino-uracil/ mannitol | 500/400 | 0.72 | 3.4 | 30.6 |
| 6 | 6-amino-uracil/ mannitol | 1000/400 | 0.713 | 2.3 | 20.7 |
| 7 Comp. ex. | Guanine/mannitol | 500/400 | 0.743 | 4.8 | 43.2 |

### Example 3 (addition of scavenger in combination with polyol as masterbatch)

Mannitol, milled sodium carbonate and 6-amino-uracil were mixed for 2 to 10 minutes in a mixer (Diosna V 160, or Mixette). Because of its direction of rotation, forced transport and a narrow residence spectrum are a given. The dosing of the 6-amino-uracil/mannitol/sodium carbonate mixture takes place together with PET through a nitrogen-washed screw dosing device with rotational speed control. From concentrations of > 10% of the additive mixture on, even, homogeneous compounding was no longer possible in the twin-screw kneader used here.

Processing parameters set:
Cylinder temperature: 260°C/265°C/265°C
Screw rotation rate: 60 rpm
Screw dosing rotation rate: 4-6 rpm
Throughput: 3 kg/h.

The manufacture of the master batch was accomplished on the DSK 42/6 of the BRABENDER Co., an internally counter-rotating twin screw kneader. The screw diameter was 43 mm and the treatment length 6D. Drying of PET takes place in a circulating air drying cabinet of the Binder Co. in a nitrogen atmosphere subject to the following conditions.
Drying temperature: 160°C
Drying period: 6 hours

The data of Table 4 shows that the addition of mannitol / 6-amino-uracil master batch significantly lowers the AA content of the extruded material.

**Table 4**

| Test No. | Batch Processing | Wt.% mannitol/ 6-amino-uracil in master batch | Concentration mannitol/ 6-amino-uracil in the extruded product, ppm | AA ppm |
|---|---|---|---|---|
| 1 | - | 0 | 0 | 11.1 |
| 2 | DSK 42/6 | 3/6 | 333/666 | 3.1 |
| 3 | DSK 42/6 | 3/6 | 500/1000 | 2.2 |
| 4 | DSK 42/6 | 4/4 | 500/500 | 3.5 |
| 5 | DSK 42/6 | 4/4 | 750/750 | 2.6 |

### Example 4 (addition of scavenger as masterbatch)

The 6-amino-1,3-dimethyl-uracil was dosed in together with the PET through a screw dosing device with rotation speed control, washed with nitrogen. All processing conditions were that same as indicated in Example 3.

**Table 5**

| Test No. | Batch Processing | Wt.% 6-amino-1,3-dimethyl-pyrimidine-2,4-dione in masterbatch | Conc. of 6-amino-1,3-dimethyl-pyrimidine-2,4-dione in the extruded product (ppm) | AA (ppm) |
|---|---|---|---|---|
| 1 | - | 0 | 0 | 11.1 |
| 2 | DSK 42/6 | 5 | 500 | 2.7 |
| 3 | DSK 42/6 | 5 | 1,000 | 1.4 |

The data of Table 5 shows that by addition of 6-amino-1,3-dimethyl-pyrimidine-2,4-dione-containing PET to the polyester to process, it is possible to significantly reduce the AA content in the extruded polyester product.

The polyester products manufactured according to the invention, especially polyethylene terephthalate, are particularly suited to the production of packaging materials, such as bottles for filling with mineral water, deep-drawn films or sheets, since their extremely low content in acetaldehyde precludes a related taste or smell impairment.

## Claims

1. A polyester composition comprising polyester and a scavenger compound represented by Formula 1: 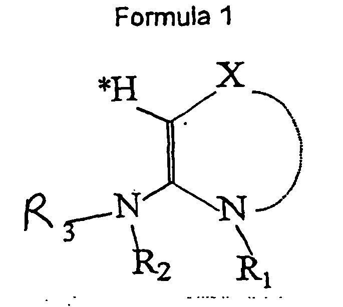 wherein:
X is a group selected from:
1) carboxyl groups selected from: ketone, ester, acid, and amide,
2) aldehyde, nitro, nitrile, and sulfone; and
3) a group of atoms necessary to complete a ring wherein said atoms are selected from: carbon, oxygen, nitrogen and sulfur which are substituted with one or more groups selected from: amine group or a group selected from 1) above;
R1 is selected from: hydrogen, an aliphatic group having from 1 to 6 carbon atoms, and a double bond within a ring; and
R2 and R3 are the same or different and are selected from: hydrogen, an aliphatic group having from 1 to 6 carbon atoms, and together R2 and R3 collectively form a ring.

2. The composition of claim 1 wherein X is a group of atoms necessary to form a heterocyclic 6-membered ring, R2 and R3 are selected from hydrogen and methyl, and R1 is selected from: hydrogen, methyl, and a double bond within the ring.

3. The composition of claim 1 wherein the polyester comprises PET.

4. The composition of claim 1 wherein the scavenger compound is a 6-membered heterocyclic ring represented by Formula 2: 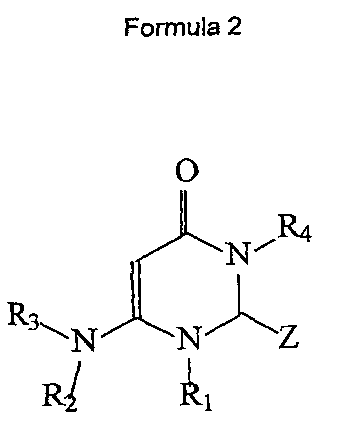 wherein:
Z is selected from a double-bonded carbonyl oxygen and amine group,
R1 is selected from: hydrogen, an aliphatic group having from 1 to 6 carbon atoms, and a double bond within the ring; however, R1 is a double bond within the ring when Z is an amine group; and
R4 is selected from: hydrogen and an aliphatic group having from 1 to 6 carbon atoms.

5. The composition of claim 4 wherein R2, R3 and R4 are the same or different and are selected from hydrogen or methyl groups, and R1 is selected from hydrogen, methyl group, or a double bond within the ring.

6. The composition of claim 4 wherein the scavenger compound is a 6-membered heterocyclic ring represented by Formula 3: 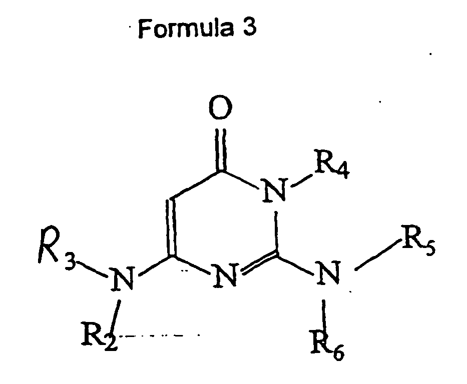 wherein R5 and R6 are the same or different and are selected from hydrogen, an aliphatic group having from 1 to 6 carbon atoms, and R5 and R6 collectively form a ring; and
R4 is selected from: hydrogen and an aliphatic group having from 1 to 6 carbon atoms.

7. The composition of claim 6 wherein R2, R3, R4, R5, and R6 are the same or different and are selected from hydrogen and methyl groups.

8. The composition of claim 4 wherein the scavenger compound is a 6-membered heterocyclic ring represented by Formula 4: 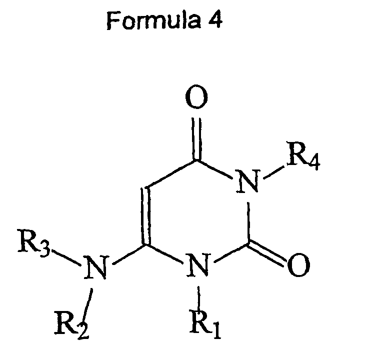 wherein:
R4 is selected from: hydrogen and an aliphatic group having from 1 to 6 carbon atoms.

9. The composition of claim 8 wherein R1, R2, R3, and R4 are the same or different and are selected from hydrogen and methyl groups.

10. The composition of claim 1 wherein the scavenger compound is selected from at least one of: 6-aminouracil, 6-amino-1-methyluracil, 6-amino-1,3-dimethyluracil and 6-aminoisocytosine.

11. The composition of claim 4 further including a polyol compound.

12. The composition of claim 11 wherein the polyol compound is selected from at least one of: mannitol, sorbitol and xylitol.

13. The composition of claim 4 comprising from 50 to 5000 parts of the scavenger compound per million parts of PET.

14. A product made from a polyester composition comprising polyester and a scavenger compound represented by Formula 1: 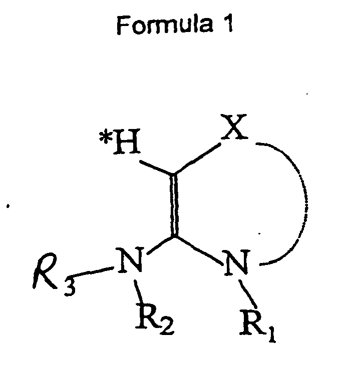 wherein:
X is a group selected from:
4) carboxyl groups selected from: ketone, ester, acid, and amide,
5) aldehyde, nitro, nitrile, and sulfone; and
6) a group of atoms necessary to complete a ring wherein said atoms are selected from: carbon, oxygen, nitrogen and sulfur which are substituted with one or more groups selected from: amine group or a group selected from 1) above;
R1 is selected from: hydrogen, an aliphatic group having from 1 to 6 carbon atoms, and a double bond within a ring; and
R2 and R3 are the same or different and are selected from: hydrogen, an aliphatic group having from 1 to 6 carbon atoms, and together R2 and R3 collectively form a ring.

15. The product of claim 14 wherein the product is a PET bottle and wherein the scavenger compound is represented by Formula 2: 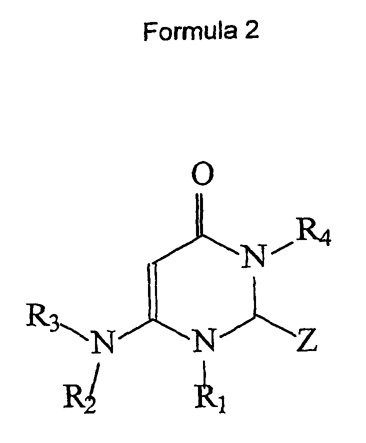 wherein:
Z is selected from: a double-bonded carbonyl oxygen and amine group, and
R4 is selected from: hydrogen and an aliphatic group having from 1 to 6 carbon atoms, and
R1 is selected from: hydrogen, an aliphatic group having from 1 to 6 carbon atoms, and a double bond within the ring; however, R1 is a double bond within the ring when Z is an amine group.

16. The product of claim 15 wherein the scavenger compound is selected from at least one of: 6-aminouracil, 6-amino-1-methyluracil, 6-amino-1,3-dimethyluracil and 6-aminoisocytosine.

17. A method for making a polyester product by combining polyester and a scavenger compound, and melt processing the resulting composition, wherein the scavenger compound is represented by Formula 2: 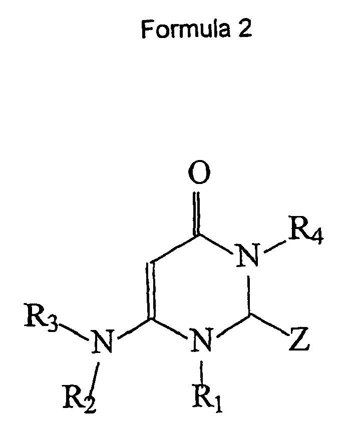 wherein:
Z is selected from: a double-bonded carbonyl oxygen and amine group, and
R4 is selected from: hydrogen and an aliphatic group having from 1 to 6 carbon atoms, and
R1 is selected from: hydrogen, an aliphatic group having from 1 to 6 carbon atoms, and a double bond within the ring; however, R1 is a double bond within the ring when Z is an amine group.

18. The method of claim 17 wherein the scavenger compound is selected from at least one of: 6-aminouracil, 6-amino-1-methyluracil, 6-amino-1,3-dimethyluracil and 6-aminoisocytosine.

## Revendications

1. Composition de polyester, comprenant un polyester et un composé fixateur représenté par la formule 1 : 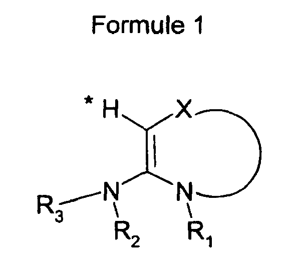 dans laquelle
- X représente un groupe choisi parmi :
1) des groupes de type carboxyle, choisis parmi les groupes fonctionnels cétone, ester, acide ou amide,
2) les groupes fonctionnels aldéhyde, nitro, nitrile et sulfone,
3) et un groupe d'atomes nécessaire pour compléter un cycle, ces atomes étant choisis parmi les atomes de carbone, d'oxygène, d'azote et de soufre, qui portent en tant que substituants un ou plusieurs groupes choisis parmi le groupe amino et l'un de ceux qui sont mentionnés ci-dessus en (1) ;
- R₁ représente une entité choisie parmi un atome d'hydrogène, un groupe aliphatique comportant de 1 à 6 atomes de carbone, et une double liaison endocyclique ;
- et R₂ et R₃ représentent des entités identiques ou différentes, choisies parmi des atomes d'hydrogène et des groupes aliphatiques comportant de 1 à 6 atomes de carbone, ou R₂ et R₃ représentent ensemble un cycle.

2. Composition conforme à la revendication 1, dans laquelle X représente un groupe d'atomes nécessaire pour former un hétérocycle à six chaînons, les entités représentées par R₂ et R₃ sont choisies parmi des atomes d'hydrogène et des groupes méthyle, et R₁ représente une entité choisie parmi un atome d'hydrogène, un groupe méthyle et une double liaison endocyclique.

3. Composition conforme à la revendication 1, dans laquelle le polyester comprend un poly(éthylène téréphtalate) (PET).

4. Composition conforme à la revendication 1, dans laquelle le composé fixateur est un composé à hétérocycle à six chaînons, représenté par la formule 2 : 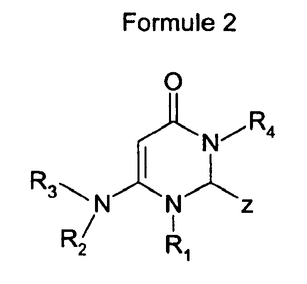 dans laquelle :
- Z représente une entité choisie parmi un groupe amino et un atome d'oxygène à double liaison formant un groupe carbonyle,
- R₁ représente une entité choisie parmi un atome d'hydrogène, un groupe aliphatique comportant 1 à 6 atomes de carbone, et une double liaison endocyclique, sous réserve que, si Z représente un groupe amino, R₁ représente une double liaison endocyclique
- et R₄ représente une entité choisie parmi un atome d'hydrogène et un groupe aliphatique comportant 1 à 6 atomes de carbone.

5. Composition conforme à la revendication 4, dans laquelle les entités représentées par R₂, R₃ et R₄ sont identiques ou différentes et sont choisies parmi des atomes d'hydrogène et des groupes méthyle, et R₁ représente une entité choisie parmi un atome d'hydrogène, un groupe méthyle et une double liaison endocyclique.

6. Composition conforme à la revendication 4, dans laquelle le composé fixateur est un composé à hétérocycle à six chaînons, représenté par la formule 3 : 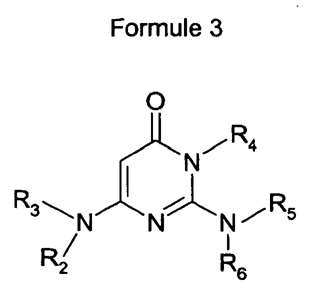 dans laquelle :
- R₅ et R₆ représentent des entités identiques ou différentes, choisies parmi des atomes d'hydrogène et des groupes aliphatiques comportant de 1 à 6 atomes de carbone, ou R₅ et R₆ représentent ensemble un cycle,
- et R₄ représente une entité choisie parmi un atome d'hydrogène et un groupe aliphatique comportant 1 à 6 atomes de carbone.

7. Composition conforme à la revendication 6, dans laquelle les entités représentées par R₂, R₃, R₄, R₅ et R₆ sont identiques ou différentes et sont choisies parmi des atomes d'hydrogène et des groupes méthyle.

8. Composition conforme à la revendication 4, dans laquelle le composé fixateur est un composé à hétérocycle à six chaînons, représenté par la formule 4 : 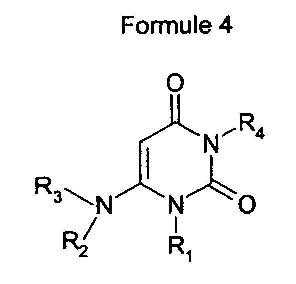 dans laquelle :
- R₄ représente une entité choisie parmi un atome d'hydrogène et un groupe aliphatique comportant 1 à 6 atomes de carbone.

9. Composition conforme à la revendication 8, dans laquelle les entités représentées par R₁, R₂, R₃ et R₄ sont identiques ou différentes et sont choisies parmi des atomes d'hydrogène et des groupes méthyle.

10. Composition conforme à la revendication 1, dans laquelle le composé fixateur est au moins un composé choisi parmi le 6-amino-uracile, le 6-amino-1-méthyl-uracile, le 6-amino-1,3-diméthyl-uracile et la 6-amino-isocytosine.

11. Composition conforme à la revendication 4, contenant en outre un composé de type polyol.

12. Composition conforme à la revendication 11, dans laquelle le composé de type polyol est au moins un polyol choisi parmi le mannitol, le sorbitol et le xylitol.

13. Composition conforme à la revendication 4, contenant de 50 à 5000 parties de composé fixateur par million de parties de PET.

14. Produit fait d'une composition de polyester comprenant un polyester et un composé fixateur représenté par la formule 1 : 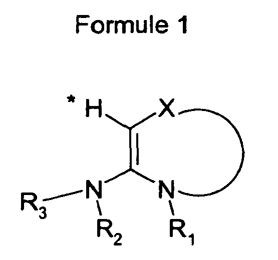 dans laquelle
- X représente un groupe choisi parmi :
4) des groupes de type carboxyle, choisis parmi les groupes fonctionnels cétone, ester, acide ou amide,
5) les groupes fonctionnels aldéhyde, nitro, nitrile et sulfone,
6) et un groupe d'atomes nécessaire pour compléter un cycle, ces atomes étant choisis parmi les atomes de carbone, d'oxygène, d'azote et de soufre, qui portent en tant que substituants un ou plusieurs groupes choisis parmi le groupe amino et l'un de ceux qui sont mentionnés ci-dessus en (1) ;
- R₁ représente une entité choisie parmi un atome d'hydrogène, un groupe aliphatique comportant de 1 à 6 atomes de carbone, et une double liaison endocyclique ;
- et R₂ et R₃ représentent des entités identiques ou différentes, choisies parmi des atomes d'hydrogène et des groupes aliphatiques comportant de 1 à 6 atomes de carbone, ou R₂ et R₃ représentent ensemble un cycle.

15. Produit conforme à la revendication 14, lequel produit est une bouteille en PET et dans lequel le composé fixateur est un composé représenté par la formule 2 : 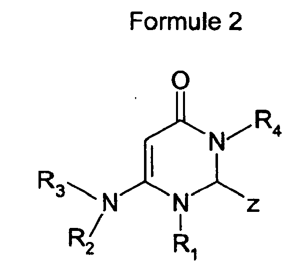 dans laquelle :
- Z représente une entité choisie parmi un groupe amino et un atome d'oxygène à double liaison formant un groupe carbonyle,
- R₄ représente une entité choisie parmi un atome d'hydrogène et un groupe aliphatique comportant 1 à 6 atomes de carbone.
- et R₁ représente une entité choisie parmi un atome d'hydrogène, un groupe aliphatique comportant 1 à 6 atomes de carbone, et une double liaison endocyclique, sous réserve que, si Z représente un groupe amino, R₁ représente une double liaison endocyclique.

16. Produit conforme à la revendication 15, dans lequel le composé fixateur est au moins un composé choisi parmi le 6-amino-uracile, le 6-amino-1-méthyl-uracile, le 6-amino-1,3-diméthyl-uracile et la 6-amino-isocytosine.

17. Procédé de fabrication d'un produit en polyester, par combinaison d'un polyester et d'un composé fixateur et traitement à l'état fondu de la composition résultante, dans lequel le composé fixateur est un composé représenté par la formule 2 : 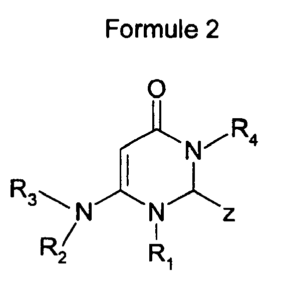 dans laquelle :
- Z représente une entité choisie parmi un groupe amino et un atome d'oxygène à double liaison formant un groupe carbonyle,
- R₄ représente une entité choisie parmi un atome d'hydrogène et un groupe aliphatique comportant 1 à 6 atomes de carbone.
- et R₁ représente une entité choisie parmi un atome d'hydrogène, un groupe aliphatique comportant 1 à 6 atomes de carbone, et une double liaison endocyclique, sous réserve que, si Z représente un groupe amino, R₁ représente une double liaison endocyclique.

18. Procédé conforme à la revendication 17, dans lequel le composé fixateur est au moins un composé choisi parmi le 6-amino-uracile, le 6-amino-1-méthyl-uracile, le 6-amino-1,3-diméthyl-uracile et la 6-amino-isocytosine.

## Patentansprüche

1. Polyesterzusammensetzung, umfassend Polyester und eine Abfängerverbindung, dargestellt durch die Formel 1: 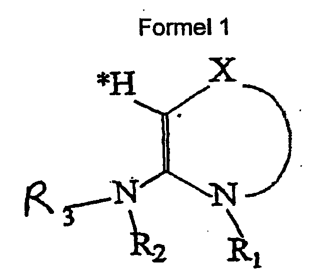 worin:
X eine Gruppe ist, ausgewählt aus:
1) Carboxylgruppen, ausgewählt aus: Keton, Ester, Säure und Amid,
2) Aldehyd, Nitro, Nitril und Sulfon; und
3) einer Gruppe von Atomen, die erforderlich ist, um einen Ring zu vervollständigen, worin die Atome ausgewählt sind aus: Kohlenstoff, Sauerstoff, Stickstoff und Schwefel, die substituiert sind it einer oder mehreren Gruppen, ausgewählt aus: einer Amingruppe oder einer Gruppe, ausgewählt aus obigem 1);
R1 ausgewählt ist aus: Wasserstoff, einer aliphatischen Gruppe, die 1 bis 6 Kohlenstoffatome aufweist, und einer Doppelbindung in einem Ring; und
R2 und R3 gleich oder verschieden sind und ausgewählt sind aus: Wasserstoff, einer aliphatischen Gruppe mit 1 bis 6 Kohlenstoffatomen, und worin R2 und R3 zusammen einen Ring bilden.

2. Zusammensetzung nach Anspruch 1, worin X eine Gruppe von Atomen ist, die erforderlich ist, um einen heterocyclischen 6-gliedrigen Ring zu bilden, R2 und R3 ausgewählt sind aus Wasserstoff und Methyl und R1 ausgewählt ist aus: Wasserstoff, Methyl und einer Doppelbindung in dem Ring.

3. Zusammensetzung nach Anspruch 1, worin der Polyester PET umfasst.

4. Zusammensetzung nach Anspruch 1, worin die Abfängerverbindung ein 6-gliedriger heterocyclischer Ring ist, dargestellt durch die Formel 2: 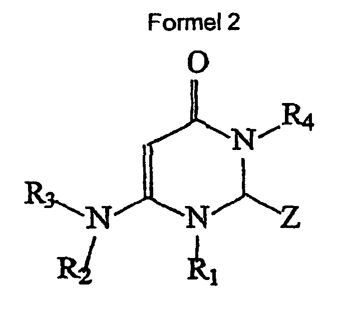 worin:
Z ausgewählt ist aus einem doppelt gebundenen Carbonylsauerstoff und einer Amingruppe,
R1 ausgewählt ist aus: Wasserstoff, einer aliphatischen Gruppe, die von 1 bis 6 Kohlenstoffatome aufweist, und einer Doppelbindung im Ring; wobei jedoch R1 eine Doppelbindung im Ring ist wenn Z eine Amingruppe ist; und
R4 ausgewählt ist aus: Wasserstoff und einer aliphatischen Gruppe mit 1 bis 6 Kohlenstoffatomen.

5. Zusammensetzung nach Anspruch 4, worin R2, R3 und R4 gleich oder verschieden sind und ausgewählt sind aus Wasserstoff oder Methylgruppen, und R1 ausgewählt ist aus Wasserstoff, einer Methylgruppe oder einer Doppelbindung im Ring.

6. Zusammensetzung nach Anspruch 4, worin die Abfängerverbindung ein 6-gliedriger heterocyclischer Ring ist, dargestellt durch die Formel 3: 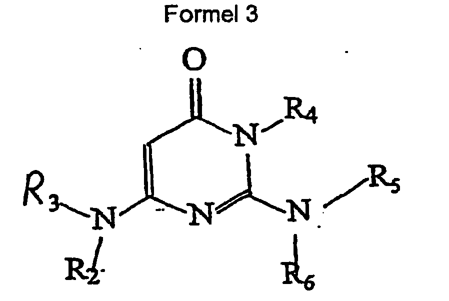 worin R5 und R6 gleich oder verschieden sind und ausgewählt sind aus Wasserstoff, einer aliphatischen Gruppe mit 1 bis 6 Kohlenstoffatomen, und R5 und R6 gemeinsam einen Ring bilden; und
R4 ausgewählt ist aus: Wasserstoff und einer aliphatischen Gruppe mit 1 bis 6 Kohlenstoffatomen.

7. Zusammensetzung nach Anspruch 6, worin R2, R3, R4, R5 und R6 gleich oder verschieden sind und ausgewählt sind aus Wasserstoff und Methylgruppen.

8. Zusammensetzung nach Anspruch 4, worin die Abfängerverbindung ein 6-gledriger heterocyclischer Ring ist, dargestellt durch die Formel 4: 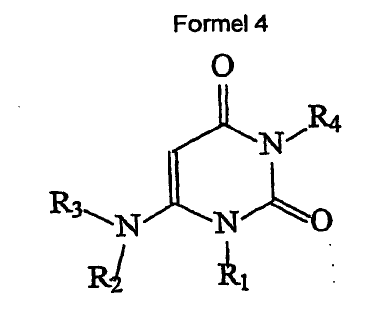 worin:
R4 ausgewählt ist aus: Wasserstoff und einer aliphatischen Gruppe mit 1 bis 6 Kohlenstoffatomen.

9. Zusammensetzung nach Anspruch 8, worin R1, R2, R3 und R4 gleich oder verschieden sind und ausgewählt sind aus Wasserstoff und Methylgruppen.

10. Zusammensetzung nach Anspruch 1, worin die Abfängerverbindung ausgewählt ist aus mindestens einem von: 6-Aminouracil, 6-Amino-1-Methyluracil, 6-Amino-1,3-dimethyluracil und 6-Aminoisocytosin.

11. Zusammensetzung nach Anspruch 4, weiterhin umfassend eine Polyolverbindung.

12. Zusammensetzung nach Anspruch 11, worin die Polyolverbindung ausgewählt ist aus mindestens einer von: Mannitol, Sorbitol und Xylitol.

13. Zusammensetzung nach Anspruch 4, umfassend von 50 bis 5000 Teile der Abfängerverbindung pro Million Teile PET.

14. Produkt, hergestellt aus einer Polyesterzusammensetzung, umfassend Polyester und eine Abfängerverbindung, dargestellt durch die Formel 1: 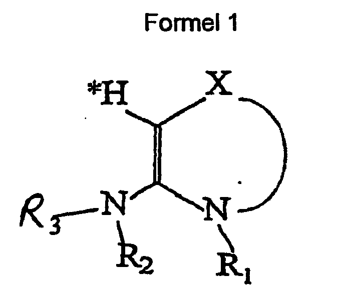 worin:
X eine Gruppe ist, ausgewählt aus:
4) Carboxylgruppen, ausgewählt aus: Keton, Ester, Säure und Amid,
5) Aldehyd, Nitro, Nitril und Sulfon; und
6) einer Gruppe von Atomen, die erforderlich ist, um einen Ring zu vervollständigen, worin die Atome ausgewählt sind aus: Kohlenstoff, Sauerstoff, Stickstoff und Schwefel, die substituiert sind mit einer oder mehreren Gruppen, ausgewählt aus: einer Amingruppe oder einer Gruppe, ausgewählt aus obigem 1);
R1 ausgewählt ist aus: Wasserstoff, einer aliphatischen Gruppe, die 1 bis 6 Kohlenstoffatome aufweist, und einer Doppelbindung in einem Ring; und
R2 und R3 gleich oder verschieden sind und ausgewählt sind aus: Wasserstoff, einer aliphatischen Gruppe mit 1 bis 6 Kohlenstoffatomen, und worin R2 und R3 zusammen einen Ring bilden.

15. Produkt nach Anspruch 14, worin das Produkt eine PET-Flasche ist worin die Abfängerverbindung dargestellt ist durch die Formel 2: 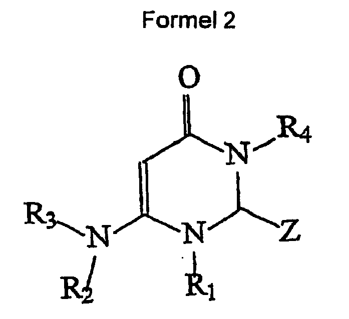 worin:
Z ausgewählt ist aus einem doppelt gebundenen Carbonylsauerstoff und einer Amingruppe,
R4 ausgewählt ist aus: Wasserstoff und einer aliphatischen Gruppe mit 1 bis 6 Kohlenstoffatomen und
R1 ausgewählt ist aus: Wasserstoff, einer aliphatischen Gruppe, die von 1 bis 6 Kohlenstoffatome aufweist, und einer Doppelbindung im Ring; wobei jedoch R1 eine Doppelbindung im Ring ist wenn Z eine Amingruppe ist.

16. Produkt nach Anspruch 15, worin die Abfängerverbindung ausgewählt ist aus mindestens einem von: 6-Aminouracil, 6-Amino-1-Methyluracil, 6-Amino-1,3-dimethyluracil und 6-Aminoisocytosin.

17. Verfahren zum Herstellen eines Polyesterprodukts durch Vereinigen von Polyester und einer Abfängerverbindung und Schmelzverarbeiten der resultierenden Zusammensetzung, worin die Abfängerverbindung dargestellt wird durch die Formel 2: 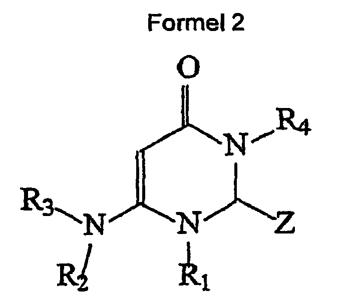 worin:
Z ausgewählt ist aus einem doppelt gebundenen Carbonylsauerstoff und einer Amingruppe,
R4 ausgewählt ist aus: Wasserstoff und einer aliphatischen Gruppe mit 1 bis 6 Kohlenstoffatomen und
R1 ausgewählt ist aus: Wasserstoff, einer aliphatischen Gruppe, die von 1 bis 6 Kohlenstoffatome aufweist, und einer Doppelbindung im Ring; wobei jedoch R1 eine Doppelbindung im Ring ist wenn Z eine Amingruppe ist.

18. Verbindung nach Anspruch 17, worin die Abfängerverbindung ausgewählt ist aus mindestens einem von: 6-Aminouracil, 6-Amino-1-Methyluracil, 6-Amino-1,3-dimethyluracil und 6-Aminoisocytosin.
